(19) Europäisches Patentamt
European Patent Office
Office européen des brevets

(11) **EP 2 867 879 B1**

(12) **EUROPEAN PATENT SPECIFICATION**

(45) Date of publication and mention
of the grant of the patent:
**01.12.2021 Bulletin 2021/48**

(21) Application number: **13756684.0**

(22) Date of filing: **18.06.2013**

(51) Int Cl.:
**G08G 1/16** *(2006.01)* **B60R 21/0132** *(2006.01)*

(86) International application number:
**PCT/IB2013/054976**

(87) International publication number:
**WO 2014/001958 (03.01.2014 Gazette 2014/01)**

(54) **METHOD AND APPLIANCE FOR DETECTING ACCIDENTS OF VEHICLES**

VERFAHREN UND ANWENDUNG ZUR ERKENNUNG VON FAHRZEUGUNFÄLLEN

PROCÉDÉ ET APPAREIL DE DÉTECTION D'ACCIDENTS DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2012 IT MO20120166**

(43) Date of publication of application:
**06.05.2015 Bulletin 2015/19**

(73) Proprietor: **Meta System S.p.A.
42124 Reggio Emilia (IT)**

(72) Inventor: **PRATI, Stefano
42124 Reggio Emilia (RE) (IT)**

(74) Representative: **Brunacci, Marco
BRUNACCI & PARTNERS S.r.l.
Via Pietro Giardini, 625
41125 Modena (MO) (IT)**

(56) References cited:
**US-A- 5 758 301      US-A1- 2001 021 890
US-B1- 6 211 777**

• **None**

**Description**

Technical Field

The present invention relates to a method for detecting accidents of vehicles.

Background Art

The use is known of special electronic appliances for installation on a vehicle and suitable for detecting accidents.

In particular, such appliances are commonly used in insurance fields, in order to determine and provide insurance companies with precise data on how accidents involving insured vehicles occur, or to provide "emergency call" (e-call) services which automatically send an emergency call in the event of detecting an accident to provide quick assistance to the drivers involved.

The known appliances comprise an accelerometer, generally able to detect accelerations along three distinct axes, which can be fixed using a special support to a portion of the vehicle structure.

The accelerometer is operationally connected to a processing unit which is able to detect an accident or in any case an anomalous situation based on the acceleration data gathered.

The processing unit commonly comprises a hardware device, of the type of an integrated circuit or the like, and the recognition of an accident based on the detected acceleration data is done using an appropriate data processing algorithm, implemented by a software programme.

In particular, the use of algorithms which compare the acceleration values detected with one or more predefined threshold values is common and widespread, in order to identify all significant acceleration values which may indicate a possible accident.

The aforementioned known appliances however present some difficulties.

In particular, the use of processing algorithms suitable for analysing and directly evaluating the detected acceleration values make the known appliances not always reliable.

Indeed, the comparison of the acceleration values with one or more predefined threshold values lead to a considerably large number of false detections, in which accelerations along one of the three axes considered anomalous by the appliance are not in fact connected to the occurrence of an accident.

Moreover, oscillations in the support of the accelerometer or the installation of the accelerometer itself in correspondence to portions of the vehicle subject to elastic oscillations may lead to measuring even very large "false" accelerations, with the consequent false detection of accidents during normal vehicle transit. Therefore, the installation position of the accelerometer must necessarily be assessed carefully according to the type of vehicle, and therefore the specific structure, and this installation position must preferably be identified in correspondence to a metal portion of the vehicle that is integral to the chassis.

Description of the Invention

The main aim of the present invention is to provide a method for detecting accidents of vehicles which allows a reliable identification of sudden events such as accidents.

Another object of the present invention is to provide a method for detecting accidents of vehicles which can be installed on a vehicle simply and with less stringent constraints compared to the background art concerning the position of installation.

Another object of the present invention is to provide a method for detecting accidents of vehicles which allows to overcome the mentioned drawbacks of the state of the art in the ambit of a simple, rational, easy and effective to use as well as low cost solution.

The above objects are achieved by the present method according to claim 1. The document US 2001/021890 A1 discloses a system and a method for the protection of passengers of a vehicle adapted to detect and identify the extent of an accident.

However, even these known system and method are susceptible of improvements.

Brief Description of the Drawings

Other characteristics and advantages of the present invention will become more evident from the description of a preferred, but not sole, embodiment of a method for detecting accidents of vehicles, illustrated purely as an example but not limited to the annexed drawings in which:

> Figures 1 and 2 are block diagrams which show the method according to the invention;
> Figure 3 is a functional diagram which shows the appliance for implementing the method according to the invention.

Embodiments of the Invention

The method according to the invention can be used particularly in insurance fields, in order to determine and provide insurance companies with precise data on how accidents involving insured vehicles occur, or to provide "emergency call" (e-call) services which automatically send an emergency call in the event of detecting an accident to provide quick assistance to the drivers involved. The method comprises the following preliminary steps, repeated cyclically over time:

- detecting at least an acceleration value A of a vehicle along at least a direction;

- comparing the acceleration value A with at least a predefined acceleration threshold value $A_{th}$.

In the event the acceleration value A is bigger than or equal to the acceleration threshold value $At_h$, then the method comprises the steps of:

- initializing a temporal variable t=0;
- calculating at least a speed value $V(t)=V(t-\Delta t)+A^*\Delta t$, where

  V(t) is the speed value calculated at a temporal instant equal to t;
  $V(t-\Delta t)$ is the speed value calculated at a temporal instant equal to $t-\Delta t$;
  A is the acceleration value;
  $\Delta t$ is a predefined sampling range;

- determining at least a speed variation value $\Delta V$ starting from the speed value V(t) and from at least a previous speed value $V(t-\Delta T_w)$;
- comparing the speed variation value $\Delta V$ with at least a predefined speed threshold value $\Delta V_{th}$.

It should be noted that the term "speed value" V(t) does not indicate the actual speed value of the vehicle, but a speed value initialised at the temporal instant t=0, according to the variations in the acceleration values A detected over time. It should also be noted that in a preferred embodiment, the method provides the initialisation of the speed value $V(t-\Delta t)$ at the instant t=0.

In particular, at the instant t=0 the speed value $V(t-\Delta t)$ is set equal to zero and the calculated speed value is $V(t)=A^*\Delta t$.

Subsequently to the above comparison step, if the speed variation value $\Delta V$ is greater than or equal to the speed threshold value $\Delta Vth$, then the method provides the step of signalling the detection of an accident on the vehicle.

If, on the other hand, the speed variation value $\Delta V$ is lower than the speed threshold value $\Delta Vth$ and if the temporal variable t is lower than a predefined measurement temporal interval T, then the method provides, for $t=t+\Delta t$, the repetition of the aforesaid steps of detecting the acceleration value A, calculating the speed value V(t), determining the speed variation value $\Delta V$ and comparing the speed variation value $\Delta V$ with the speed threshold value $\Delta V_{th}$.

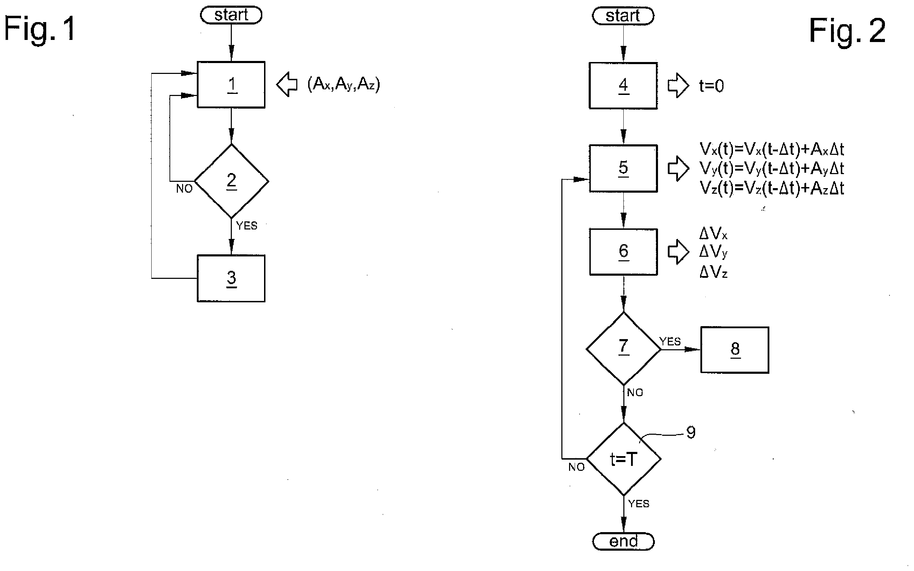

According to the invention, illustrated in particular in figures 1 and 2, the method comprises the detection of three acceleration values Ax, Ay, Az respectively along three distinct directions x, y, z (step 1) and the comparison of each of the acceleration values Ax, Ay, Az with the respective predefined acceleration threshold values Athx, Athy and Athz (step2).

Preferably, the detection of the three acceleration values Ax, Ay, Az (step 1) is done using an appropriate three-axis accelerometer installed on the vehicle and comprises the sampling of these acceleration values Ax, Ay, Az detected at a predefined sampling frequency fc which is greater than or equal to 100 Hz. The sampling of the acceleration values Ax, Ay, Az detected at a different sampling frequency fc cannot however be ruled out.

Usefully, the method comprises the filtering of the acceleration values Ax, Ay, Az, done to eliminate the continuous component due to the acceleration by gravity.

For example, the filtering can be done after the sampling of the acceleration values Ax, Ay, Az using a FIR (Finite Impulse Response) or IIR (Infinite Impulse Response) type high-pass filter.

Moreover, the acceleration threshold values Athx, Athy and Athz compared with each of the acceleration values Ax, Ay, Az are preferably between 10 and 40 m/s2.

Different acceleration threshold values Athx, Athy and Athz cannot however be ruled out.

Advantageously, in the case in which at least one of the acceleration values Ax, Ay, Az is greater than or equal to the respective acceleration threshold value Athx, Athy and Athz (step 2), the methods provides the activation of a gathered acceleration data processing algorithm suitable for checking the effective presence or not of an accident on the vehicle (step 3).

Usefully, to limit false detections, if it is detected that at least one of the acceleration values Ax, Ay, Az is greater than or equal to the respective acceleration threshold value Athx, Athy and Athz, then the detection (step 1) and comparison steps (step 2) are repeated for a predefined number of times, preferably two.

Therefore, the gathered acceleration data processing algorithm is activated only if it is detected that at least one of the acceleration values Ax, Ay, Az is greater than or equal to the respective acceleration threshold value Athx, Athy and Athz for three consecutive times.

Usefully, in an alternative embodiment of the method according to the invention there may be a further step for determining the acceleration vector module, calculated by the formula:

$$|A(t)|=\sqrt{(Ax2+Ay2+Az2)}, \text{ where}$$
$|A(t)|$ is the acceleration vector module,
Ax, Ay, Az are the acceleration values.

In this case, as an alternative to the comparison on the three axes of the acceleration values Ax, Ay and Az with the respective acceleration threshold values Athx, Athy and Athz (step 2), the method provides the comparison of the acceleration module |A(t)| thus calculated with a scalar acceleration threshold value Ath.

In particular, if the acceleration module |A(t)| is greater than or equal to the scalar acceleration threshold value Ath, then the method provides the activation of the acceleration data processing algorithm in order to check the effective presence or not of an accident on the vehicle (step 3).

Usefully, the use of the acceleration module |A(t)| helps to increase the precision of the detections made, in particular in the case in which any impact to the vehicle develops along an intermediate direction between the detection axes x, y and z of the acceleration values Ax, Ay, Az.

As illustrated in particular in figure 2, if at least one of the acceleration values Ax, Ay, Az is greater than or equal to the respective acceleration threshold value Athx, Athy and Athz, then the abovementioned processing algorithm comprises the steps described below.

In particular, the method provides a preliminary step (step 4) of initialisation of a temporal variable t, set equal to zero.

Thereafter, the method comprises the calculation of the speed values Vx(t), Vy(t) and Vz(t) (step 5), done using the following formulae:

$$Vx(t)=Vx(t-\Delta t)+Ax*\Delta t,$$

$$Vy(t)=Vy(t-\Delta t)+Ay*\Delta t,$$

$$Vz(t)=Vz(t-\Delta t)+Az*\Delta t,$$

where

Vx(t), Vy(t) and Vz(t) are the speed values calculated at a temporal instant t;
Vx(t-$\Delta t$), Vy(t-$\Delta t$) and Vz(t-$\Delta t$) are the speed values calculated at a temporal instant t-$\Delta t$;
Ax, Ay, Az are the acceleration values;
$\Delta t$ is a predefined sampling interval, equal to 1/fc.

It should also be noted that in a preferred embodiment, the method provides the initialisation of the speed values Vx(t-$\Delta t$), Vy(t-$\Delta t$) and Vz(t-$\Delta t$) at the instant t=0.

In particular, at the instant t=0 the speed values Vx(t-$\Delta t$), Vy(t-$\Delta t$) and Vz(t-$\Delta t$) are set equal to zero and the calculated speed values are equal to Vx(t)=Ax*$\Delta t$, Vy(t)=Ay*$\Delta t$ and Vz(t)=Az*$\Delta t$.

Moreover, usefully the sampling interval $\Delta t$ (and therefore the sampling frequency fc) can be dynamically varied according to the state of the algorithm. For example, the use of a greater sampling interval $\Delta t$ (and therefore a lower sampling frequency fc) may be provided when the method only detects the acceleration values Ax, Ay, Az (step 1), while the use of a lower sampling interval $\Delta t$ (and therefore a greater sampling frequency fc) may be provided when the methods detects the acceleration values Ax, Ay, Az (step 1) and calculates the speed values Vx(t), Vy(t) and Vz(t) (step 5).

The method also includes the determination of speed variation values $\Delta$Vx, $\Delta$Vy and $\Delta$Vz starting from the speed values Vx(t), Vy(t) and Vz(t) and from previous speed values Vx(t-$\Delta$Tw) Vy(t-$\Delta$Tw) and Vz(t-$\Delta$Tw) (step 6). Subsequently the method comprises the comparison of the speed variation values $\Delta$Vx,$\Delta$Vy and $\Delta$Vz with the respective predefined speed threshold values $\Delta$Vthx, $\Delta$Vthy and $\Delta$Vthz (step 7).

If at least one of the speed variation values $\Delta$Vx, $\Delta$Vy and $\Delta$Vz is greater than or equal to the respective speed threshold value $\Delta$Vthx, $\Delta$Vthy and $\Delta$Vthz, then the method comprises the step of signalling the detection of an accident on the vehicle (step 8).

Usefully, in a possible embodiment of the method according to the invention and in order to limit false detections, the signalling of an accident (step 8) is activated only in the case in which it is detected that at least one of the speed variation values $\Delta$Vx, $\Delta$Vy and $\Delta$Vz is greater than or equal to the respective speed threshold value $\Delta$Vthx, $\Delta$Vthy and $\Delta$Vthz for a predefined number of consecutive times, preferably three.

If, on the other hand, all the speed variation values $\Delta$Vx, $\Delta$Vy and $\Delta$Vz are lower than the respective speed threshold values $\Delta$Vthx, $\Delta$Vthy and $\Delta$Vthz and if the temporal variable t is lower than a predefined measurement temporal interval T (steps 7 and 9), then the method comprises, for t=t+$\Delta t$, the repetition of the above steps for the detection of the three acceleration values Ax, Ay, Az (step 1), the calculation of the speed values Vx(t), Vy(t) and Vz(t) (step 5), the determination of the speed variation values $\Delta$Vx, $\Delta$Vy and $\Delta$Vz (step 6) and the comparison of the speed variation values $\Delta$Vx, $\Delta$Vy and $\Delta$Vz with the speed threshold values $\Delta$Vthx, $\Delta$Vthy and $\Delta$Vthz (step 7).

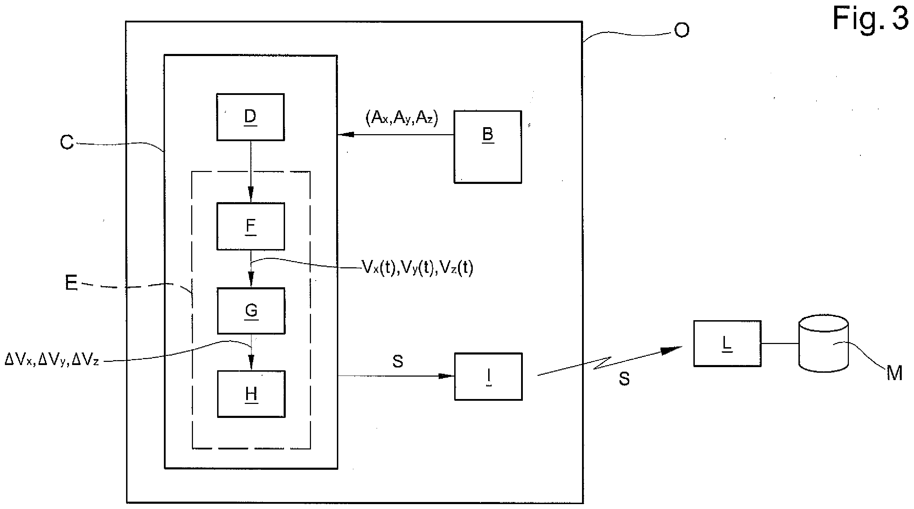

At the end of the measurement temporal interval T the processing algorithm illustrated in figure 3 ends, while the iterative repetition of the steps to detect the three acceleration values Ax, Ay, Az (step 1) and the comparison with each of the acceleration values Ax, Ay, Az with the respective predefined acceleration threshold values Athx, Athy and Athz (step 2) continues. Preferably, the measurement temporal interval T is equal to 300 ms.

The use of a different measurement temporal interval T cannot however be ruled out.

Advantageously, the method according to the invention comprises the definition of a mobile temporal window $\Delta$Tw within the measurement temporal interval T. The speed variation values $\Delta$Vx, $\Delta$Vy and $\Delta$Vz in step 6 are determined according to the following formula:

$$\Delta Vx=Vx(t)-Vx(t-\Delta Tw),$$

$$\Delta Vy=Vy(t)-Vy(t-\Delta Tw),$$

$\Delta$Vz=Vz(t)-Vz(t-$\Delta$Tw), where
$\Delta$Vx, $\Delta$Vy and $\Delta$Vz are the speed variation values;
Vx(t), Vy(t) and Vz(t) are the calculated speed values;

ΔTw is the aforementioned mobile temporal window; Vx(t-ΔTw), Vy(t-ΔTw) and Vz(t-ΔTw) are the previous speed values calculated at a temporal instant of t-ΔTw.

In particular, the duration of the mobile temporal window ΔTw is preferably between 30 ms and 150 ms.

In a preferred embodiment of the method, the duration of the mobile temporal window ΔTw is equal to 70 ms.

The use of a mobile temporal window ΔTw of a different duration cannot however be ruled out.

Moreover, preferably the speed threshold values ΔVthx, ΔVthy and ΔVthz are between 0.3 m/s and 3 m/s.

It should be noted that ΔVth/ΔTw indicates the average deceleration in the window ΔTw and that this parameter must be higher than the performance of the vehicle in normal road conditions, preferably greater than 14 m/s2.

Usefully, according to a preferred embodiment of the method according to the invention, a first speed threshold value ΔVth' equal to 0.5 m/s and a second speed threshold value ΔVth" equal to 1 m/s are envisaged.

The use of different threshold values cannot however be ruled out.

If the speed variation values ΔVx, ΔVy and ΔVz are greater than or equal to the first speed threshold value ΔVth' and lower than the second speed threshold value ΔVth", then the involvement of the vehicle in a significant but minor accident is signalled.

If, on the other hand, the speed variation values ΔVx, ΔVy and ΔVz are greater than or equal to the second speed threshold value ΔVth", then the involvement of the vehicle in an average or serious accident is signalled.

Usefully, it should be noted that the method involves the memorisation of a predefined number of acceleration values Ax, Ay, Az preceding the instant of exceeding the acceleration threshold values Athx, Athy and Athz, in order to be able to also calculate the speed variation values ΔVx, ΔVy and ΔVz immediately preceding said instant.

Usefully, the method according to the invention can comprise the automatic calibration of at least one between the acceleration threshold values Athx, Athy and Athz, the measurement temporal interval T, the speed threshold values ΔVthx, ΔVthy and ΔVthz and the mobile temporal window ΔTw.

This automatic calibration may be implemented by detecting false signalling of accidents and the consequent modification of these parameters.

For example, the acceleration threshold values Athx, Athy and Athz may be modified if the presence of an accident is not signalled following the activation of the processing algorithm shown in figure 2.

Moreover, a further embodiment may include the modification of the acceleration threshold values Athx, Athy and Athz and/or the speed threshold values ΔVthx, ΔVthy and ΔVthz according to the tachometer speed of the vehicle.

In particular, a higher vehicle speed corresponds generally to an increase in vibrations and, therefore, higher threshold values may be set.

Usefully, in an alternative embodiment of the method according to the invention there may be, after the determination of the speed variation values ΔVx, ΔVy and ΔVz (step 6), a further step of determining the speed vector module, calculated by the formula:

$$|V(t)| = \sqrt{(\Delta Vx2 + \Delta Vy2 + \Delta Vz2)}, \text{ where}$$
$|V(t)|$ is the speed vector module,
ΔVx, ΔVy, ΔVz are the speed variation values.

In this case, alternatively to the comparison on the three axes of the speed variation values ΔVx, ΔVy and ΔVz with the respective speed threshold values ΔVthx, ΔVthy and ΔVthz (step 7), the method involves the comparison of the speed module $|V(t)|$ thus calculated with a scalar speed threshold value $\Delta V_{th}$.

In particular, if the speed module $|V(t)|$ is greater than or equal to the scalar speed threshold value ΔVth, then the method envisages the step of signalling the detection of an accident on the vehicle (step 8).

If, on the other hand, the speed module $|V(t)|$ is lower than the scalar speed threshold value ΔVth and if the temporal variable t is lower than a predefined measurement temporal interval T then the method includes, for t=t+Δt, the repetition of the above steps of detecting the three acceleration values Ax, Ay, Az (step 1), calculating the speed values Vx(t), Vy(t) and Vz(t) (step 5), determining the speed variation values ΔVx, ΔVy and ΔVz (step 6), determining the speed module $|V(t)|$ and comparing the speed module $|V(t)|$ with the scalar speed threshold value $\Delta V_{th}$.

Usefully, the use of the speed module $|V(t)|$ helps to increase the precision of the detections made, in particular in the case in which any impact to the vehicle develops along an intermediate direction between the detection axes x, y and z of the acceleration values Ax, Ay, Az.

The appliance O for detecting accidents is illustrated schematically in figure 3. The appliance O does not form part of the claimed invention but it is mentioned in order to aid the understanding of the invention.

The appliance O comprises one or more electronic devices which can be installed on board a vehicle.

In particular, the appliance O comprises detection means B for detecting the acceleration values Ax, Ay, Az along three respective and distinct directions x, y, z.

Preferably, the detection means B are composed of a three-axis accelerometer or a similar device.

Usefully, the appliance O comprises sampling means, not illustrated in the figure, operationally connected to the accelerometer B and suitable for sampling the acceleration values Ax, Ay, Az at the predefined sampling frequency fc. The appliance O also comprises at least a filter suitable for filtering the acceleration values Ax, Ay, Az detected by the accelerometer B, in order to eliminate the continuous component due to the acceleration by gravity.

This filter may be made up, e.g., of a high-pass filter, connected downstream of the sampling means, of the FIR (Finite Impulse Response) or IIR (Infinite Impulse Response) type.

The appliance O also comprises electronic management and control means, indicated generally in figure 3 by reference C, suitable for processing the acceleration values Ax, Ay, Az detected by the accelerometer B for the detection of accidents.

In particular, the electronic management and control means C are implemented by one or more appropriate hardware components and by one or more appropriate software programmes.

The electronic management and control means C comprise first comparison means D used to compare each of the acceleration values Ax, Ay, Az with the respective predefined acceleration threshold values Athx, Athy and Athz.

The electronic management and control means C comprise processing means, indicated generally in figure 3 by reference E, which can be activated if the first comparison means D detect that at least one of the acceleration values Ax, Ay, Az is greater than or equal to a respective acceleration threshold value Athx, Athy and Athz.

In particular, the processing means E have:

- first calculation means F suitable for calculating the speed values Vx(t), Vy(t) and Vz(t);
- second calculation means G suitable for determining the speed variation values ΔVx, ΔVy and ΔVz starting with the speed values Vx(t), Vy(t) and Vz(t) and the previous speed values Vx(t-ΔTw), Vy(t-ΔTw) and Vz(t-ΔTw);
- second comparison means H suitable for comparing the speed variation values ΔVx, ΔVy and ΔVz with the speed threshold values ΔVthx, ΔVthy and ΔVthz.

The processing means E are operationally connected to signalling means I suitable for signalling the detection of an accident on the vehicle if the second comparison means H detect that the speed variation values ΔVx, ΔVy and ΔVz are greater than or equal to the speed threshold values ΔVthx, ΔVthy and ΔVthz.

In particular, referring to a preferred embodiment illustrated in figure 3, the signalling means I are made up of a communication unit suitable for communicating with a remote unit L to send a signal S detecting an accident on the vehicle if the second comparison means H detect that the speed variation values ΔVx, ΔVy and ΔVz are greater than or equal to the speed threshold values ΔVthx, ΔVthy and ΔVthz.

The remote unit L is connected to a memory unit M for storing the data concerning the detected accident, such as the acceleration values Ax, Ay, Az which activated the processing means E and the subsequent acceleration values and, possibly, previous to that activation, the speed values Vx(t), Vy(t) and Vz(t) which exceeded the speed threshold values ΔVthx, ΔVthy and ΔVthz. The second calculation means G comprise means for the definition of the mobile temporal window ΔTw within the measurement temporal interval T and the calculation of the speed variation ΔV is done according to the speed values Vx(t), Vy(t) and Vz(t) detected within the mobile temporal window ΔTw.

The appliance O may also be equipped with automatic calibration means for at least one between the acceleration threshold values Athx, Athy and Athz, the measurement temporal interval T, the speed threshold values ΔVthx, ΔVthy and ΔVthz and the mobile temporal window ΔTw.

These automatic calibration means, e.g., may detect the occurrence of false accident signals in order to consequently modify these parameters.

It has in practice been ascertained how the described invention achieves the proposed objects.

In particular, the fact is underlined that the use of the speed variation within a specific temporal window as a parameter for checking an accident helps to limit false detections to a minimum, thus guaranteeing the reliable identification of sudden events such as accidents.

Indeed, this check is based on speed values calculated as an integral of the detected acceleration values and, therefore, positive and negative accelerations due to oscillations of the accelerometer or the vehicle only minimally influence the calculated speed variation value.

**Claims**

1. Method for detecting accidents of vehicles, comprising the following steps:

    - detecting a plurality of acceleration values ($A_x$, $A_y$, $A_z$) of a vehicle along respective directions;
    - comparing said acceleration values ($A_x$, $A_y$, $A_z$) with at least a predefined acceleration threshold value ($A_{thx}$, $A_{thy}$, $A_{thz}$);

    if at least one of said acceleration values ($A_x$, $A_y$, $A_z$) is bigger than or equal to said acceleration threshold value ($A_{thx}$, $A_{thy}$, $A_{thz}$):

        - initializing a temporal variable t=0;
        - calculating a plurality of speed values by means of the formula $V_i(t)=V_i(t-\Delta t)+A_i*\Delta t$, where:

            i means said directions of detection of the acceleration values ($A_x$, $A_y$, $A_z$);

$V_i(t)$ are said speed values calculated at a temporal instant equal to t;

$V_i(t-\Delta t)$ are said speed values calculated at a temporal instant equal to t-$\Delta t$;

$A_i$ are said acceleration values;

$\Delta t$ is a predefined sampling range;

- determining a plurality of speed variation values ($\Delta V_x$, $\Delta V_y$, $\Delta V_z$) starting from said speed values ($V_x(t)$, $V_y(t)$, $V_z(t)$) and from at least a previous speed value ($V_x(t-\Delta T_w)$, $V_y(t-\Delta T_w)$, $V_z(t-\Delta T_w)$);

- determining a speed vector module ($|V(t)|$) by means of the formula $|V(t)|=\sqrt{(\Sigma(\Delta V_i^2))}$, where:

    $|V(t)|$ is said speed vector module,
    $\Delta V_i$ are said speed variation values, where i shows said directions of detection of the acceleration values ($A_x$, $A_y$, $A_z$);

- comparing said speed vector module ($|V(t)|$) with at least a speed threshold value ($\Delta V_{th}$) and, if said speed vector module ($|V(t)|$) is bigger than or equal to said speed threshold value ($\Delta V_{th}$), signalling the detection of an accident on said vehicle;

- if said speed vector module ($|V(t)|$) is lower than said speed threshold value ($\Delta V_{th}$) and if said temporal variable (t) is lower than a predefined measurement temporal interval (T), repeating said steps of detecting, calculating, determining a plurality of speed variation values ($\Delta V_x$, $\Delta V_y$, $\Delta V_z$), determining a speed vector module ($|V(t)|$) and comparing, for t=t+$\Delta t$.

2. Method according to the claim 1, **characterized by** the fact that it comprises defining at least a mobile temporal window ($\Delta T_w$) within said measurement temporal interval (T), said speed variation values ($\Delta V_x$, $\Delta V_y$, $\Delta V_z$) being determined by means of the following formula:

    $\Delta V_i = V_i(t) - V_i(t-\Delta T_w)$, where:
    $\Delta V_i$ is said speed variation value;
    $V_i(t)$ is said calculated speed value;
    $\Delta T_w$ is said mobile temporal window;
    $V_i(t-\Delta T_w)$ is said previous speed value calculated at a temporal instant equal to t-$\Delta T_w$.

3. Method according to one or more of the preceding claims, **characterized by** the fact that said acceleration threshold values ($A_x$, $A_y$, $A_z$) are between 10 and 40 m/s$^2$.

4. Method according to one or more of the preceding claims, **characterized by** the fact that said temporal interval (T) is equal to 300 ms.

5. Method according to one or more of the preceding claims, **characterized by** the fact that the duration of said mobile temporal window ($\Delta T_w$) is between 30 ms and 150 ms.

6. Method according to one or more of the preceding claims, **characterized by** the fact that the duration of said mobile temporal window ($\Delta T_w$) is equal to 70 ms.

7. Method according to one or more of the preceding claims, **characterized by** the fact that said speed threshold value ($\Delta V_{th}$) is between 0,3 m/s and 3 m/s.

8. Method according to one or more of the preceding claims, **characterized by** the fact that it comprises a first speed threshold value ($\Delta V_{th}'$) equal to 0,5 m/s and a second speed threshold value ($\Delta V_{th}''$) equal to 1 m/s.

## Patentansprüche

1. Verfahren zum Erkennen von Unfällen von Fahrzeugen, das die folgenden Schritte umfasst:

- Erfassen einer Vielzahl von Beschleunigungswerten ($A_x$, $A_y$, $A_z$) eines Fahrzeugs entlang entsprechender Richtungen;

- Vergleichen der Beschleunigungswerte ($A_x$, $A_y$, $A_z$) mit mindestens einem vorgegebenen Beschleunigungsschwellenwert ($A_{thx}$, $A_{thy}$, $A_{thz}$);

wenn mindestens einer der Beschleunigungswerte ($A_x$, $A_y$, $A_z$) größer als oder gleich dem Beschleunigungsschwellenwert ($A_{thx}$, $A_{thy}$, $A_{thz}$) ist:

- Initialisieren einer zeitlichen Variablen t=0;

- Berechnen einer Vielzahl von Geschwindigkeitswerten mit Hilfe der Formel $V_i(t)=V_i(t-\Delta t)+A_i*\Delta t$, wobei:

    i die Erfassungsrichtungen der Beschleunigungswerte ($A_x$, $A_y$, $A_z$) bedeutet; $V_i(t)$ die Geschwindigkeitswerte sind, die zu einem Zeitpunkt gleich t berechnet werden;
    $V_i(t-\Delta t)$ die Geschwindigkeitswerte sind, die zu einem Zeitpunkt gleich t-$\Delta t$ berechnet werden;
    $A_i$ die Beschleunigungswerte sind;
    $\Delta t$ ein vordefinierter Abtastbereich ist;

- Bestimmen einer Vielzahl von Geschwindigkeitsänderungswerten ($\Delta V_x$, $\Delta V_y$, $\Delta V_z$) ausgehend von den Geschwindigkeitswerten ($V_x(t)$, $V_y(t)$, $V_z(t)$) und von mindestens einem vorherigen Geschwindigkeitswert ($V_x(t-\Delta T_w)$, $V_y(t-$

$\Delta T_w$), $V_z(t-\Delta T_w$));
- Bestimmen eines Geschwindigkeitsvektormoduls ($|V(t)|$) mit Hilfe der Formel $|V(t)|=\sqrt{(\Sigma(\Delta Vi^2))}$, wobei

$|V(t)|$ das Geschwindigkeitsvektormodul ist, $\Delta V_i$ die Geschwindigkeitsänderungswerte sind, wobei i die Erfassungsrichtungen der Beschleunigungswerte ($A_x$, $A_y$, $A_z$) angibt;

- Vergleichen des Geschwindigkeitsvektormoduls ($|V(t)|$) mit mindestens einem Geschwindigkeitsschwellenwert ($\Delta V_{th}$) und, wenn das Geschwindigkeitsvektormodul ($|V(t)|$) größer als oder gleich dem Geschwindigkeitsschwellenwert ($\Delta V_{th}$) ist, Signalisieren des Erkennens eines Unfalls an dem Fahrzeug;
- wenn das Geschwindigkeitsvektormodul ($|V(t)|$) kleiner als der Geschwindigkeitsschwellenwert ($\Delta V_{th}$) ist und wenn die zeitliche Variable (t) kleiner als ein vorgegebenes Messzeitintervall (T) ist, Wiederholen der Schritte des Erfassens, Berechnens, Bestimmens einer Vielzahl von Geschwindigkeitsänderungswerten ($\Delta V_x$, $\Delta V_y$, $\Delta V_z$), des Bestimmens eines Geschwindigkeitsvektormoduls ($|V(t)|$) und des Vergleichens für t=t+$\Delta$t.

2. Verfahren nach Anspruch 1, **dadurch gekennzeichnet, dass** es ein Definieren mindestens eines beweglichen Zeitfensters ($\Delta T_w$) innerhalb des Messzeitintervalls (T) umfasst, wobei die Geschwindigkeitsänderungswerte ($\Delta V_x$, $\Delta V_y$, $\Delta V_z$) mittels der folgenden Formel bestimmt werden:
$\Delta V_i=V_i(t)-V_i(t-\Delta T_w$), wobei:

$\Delta V_i$ der Wert der Geschwindigkeitsänderung ist;
$V_i(t)$ der berechnete Geschwindigkeitswert ist;
$\Delta T_w$ das bewegliche Zeitfenster ist;
$V_i(t-\Delta T_w$) der vorherige Geschwindigkeitswert ist, der zu einem Zeitpunkt gleich t-$\Delta T_w$ berechnet wurde.

3. Verfahren nach einem oder mehreren der vorhergehenden Ansprüche, **dadurch gekennzeichnet, dass** die Beschleunigungsschwellenwerte ($A_x$, $A_y$, $A_z$) zwischen 10 und 40 m/s² liegen.

4. Verfahren nach einem oder mehreren der vorhergehenden Ansprüche, **dadurch gekennzeichnet, dass** das Zeitintervall (T) gleich 300 ms ist.

5. Verfahren nach einem oder mehreren der vorhergehenden Ansprüche, **dadurch gekennzeichnet, dass** die Dauer des beweglichen Zeitfensters ($\Delta T_w$) zwischen 30 ms und 150 ms liegt.

6. Verfahren nach einem oder mehreren der vorangehenden Ansprüche, **dadurch gekennzeichnet, dass** die Dauer des mobilen Zeitfensters ($\Delta T_w$) gleich 70 ms ist.

7. Verfahren nach einem oder mehreren der vorhergehenden Ansprüche, **dadurch gekennzeichnet, dass** der Geschwindigkeitsschwellenwert ($\Delta V_{th}$) zwischen 0,3 m/s und 3 m/s liegt.

8. Verfahren nach einem oder mehreren der vorhergehenden Ansprüche, **dadurch gekennzeichnet, dass** es einen ersten Geschwindigkeitsschwellenwert ($\Delta V_{th}$') von 0,5 m/s und einen zweiten Geschwindigkeitsschwellenwert ($\Delta V_{th}$") von 1 m/s umfasst.

**Revendications**

1. Procédé de détection d'accidents de véhicules, comprenant les étapes suivantes :

- la détection d'une pluralité de valeurs d'accélération ($A_x$, $A_y$, $A_z$) d'un véhicule le long de directions respectives ;
- la comparaison desdites valeurs d'accélération ($A_x$, $A_y$, $A_z$) à au moins une valeur de seuil d'accélération prédéfinie ($A_{thx}$, $A_{thy}$, $A_{thz}$) ;

si au moins l'une desdites valeurs d'accélération ($A_x$, $A_y$, $A_z$) est supérieure ou égale à ladite valeur de seuil d'accélération ($A_{thx}$, $A_{thy}$, $A_{thz}$) :

- l'initialisation d'une variable temporelle t=0 ;
- le calcul d'une pluralité de valeurs de vitesse au moyen de la formule $V_i(t)=V_i(t-\Delta t)+A_i*\Delta t$, où :

i signifie lesdites directions de détection des valeurs d'accélération ($A_x$, $A_y$, $A_z$) ;
$V_i(t)$ sont lesdites valeurs de vitesse calculées à un instant temporel égal à t ;
$V_i(t-\Delta t)$ sont lesdites valeurs de vitesse calculées à un instant temporel égal à t-$\Delta$t ;
$A_i$ sont lesdites valeurs d'accélération ;
$\Delta$t est une plage d'échantillonnage prédéfinie ;

- la détermination d'une pluralité de valeurs de variation de vitesse ($\Delta V_x$, $\Delta V_y$, $\Delta V_z$) en commençant à partir desdites valeurs de vitesse ($V_x(t)$, $V_y(t)$, $V_z(t)$) et à partir d'au moins une valeur de vitesse précédente ($V_x(t-\Delta T_w$), $V_y(t-\Delta T_w$), $V_z(t-\Delta T_w$)) ;
- la détermination d'un module de vecteur de vitesse ($|V(t)|$) au moyen de la formule $|V(t)|=\sqrt{(\Sigma(\Delta V_i^2))}$, où :

$|V(t)|$ est ledit module de vecteur de vitesse,

$\Delta V_i$ sont lesdites valeurs de variation de vitesse, où i représente lesdites directions de détection des valeurs d'accélération ($A_x$, $A_y$, $A_z$) ;

- la comparaison dudit module de vecteur de vitesse |V(t)| à au moins une valeur de seuil de vitesse ($\Delta V_{th}$) et, si ledit module de vecteur de vitesse |V(t)| est supérieur ou égal à ladite valeur de seuil de vitesse ($\Delta V_{th}$), le signalement de la détection d'un accident sur ledit véhicule ;
- si ledit module de vecteur de vitesse |V(t)| est inférieur à ladite valeur de seuil de vitesse ($\Delta V_{th}$) et si ladite variable temporelle (t) est inférieure à un intervalle temporel de mesure prédéfini (T), la répétition desdites étapes de la détection, le calcul, la détermination d'une pluralité de valeurs de variation de vitesse ($\Delta V_x$, $\Delta V_y$, $\Delta V_z$), la détermination d'un module de vecteur de vitesse (|V(t)|) et la comparaison, pour t=t+$\Delta$t.

2. Procédé selon la revendication 1, **caractérisé par le fait qu'**il comprend la définition d'au moins une fenêtre temporelle mobile ($\Delta T_w$) à l'intérieur dudit intervalle temporel de mesure (T), lesdites valeurs de variation de vitesse ($\Delta V_x$, $\Delta V_y$, $\Delta V_z$) étant déterminées au moyen de la formule suivante :
$\Delta V_i$=$V_i$(t)-$V_i$(t-$\Delta T_w$), où :

$\Delta V_i$ est ladite valeur de variation de vitesse ;
$V_i$(t) est ladite valeur de vitesse calculée ;
$\Delta t_w$ est ladite fenêtre temporelle mobile ;
$V_i$(t-$\Delta T_w$) est ladite valeur de vitesse précédente calculée à un instant temporel égal à t-$\Delta T_w$.

3. Procédé selon une ou plusieurs des revendications précédentes, **caractérisé par le fait que** lesdites valeurs d'accélération ($A_x$, $A_y$, $A_z$) sont entre 10 et 40 m/s$^2$.

4. Procédé selon une ou plusieurs des revendications précédentes, **caractérisé par le fait que** ledit intervalle temporel (T) est égal à 300 ms.

5. Procédé selon une ou plusieurs des revendications précédentes, **caractérisé par le fait que** la durée de ladite fenêtre temporelle mobile ($\Delta T_w$) est entre 30 ms et 150 ms.

6. Procédé selon une ou plusieurs des revendications précédentes, **caractérisé par le fait que** la durée de ladite fenêtre temporelle mobile ($\Delta T_w$) est égale à 70 ms.

7. Procédé selon une ou plusieurs des revendications précédentes, **caractérisé par le fait que** ladite valeur de seuil de vitesse ($\Delta V_{th}$) est entre 0,3 m/s et 3 m/s.

8. Procédé selon une ou plusieurs des revendications précédentes, **caractérisé par le fait qu'**il comprend une première valeur de seuil de vitesse ($\Delta V_{th}$') égale à 0,5 m/s et une seconde valeur de seuil de vitesse ($\Delta V_{th}$") égale à 1 m/s.

# Fig. 2

$t=0$

$V_x(t)=V_x(t-\Delta t)+A_x\Delta t$
$V_y(t)=V_y(t-\Delta t)+A_y\Delta t$
$V_z(t)=V_z(t-\Delta t)+A_z\Delta t$

$\Delta V_x$
$\Delta V_y$
$\Delta V_z$

start → 4 → 5 → 6 → 7 (YES → 8) / (NO → t=T) (9) — YES → end / NO

# Fig. 1

$(A_x, A_y, A_z)$

start → 1 → 2 — NO / YES → 3

$(A_x, A_y, A_z)$

$V_x(t), V_y(t), V_z(t)$

$\Delta V_x, \Delta V_y, \Delta V_z$

S

S

Fig. 3

EP 2 867 879 B1

**EP 2 867 879 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2001021890 A1